# EUROPÄISCHE PATENTANMELDUNG

(11) **EP 2 110 592 A2**
(43) Veröffentlichungstag der Anmeldung: **21.10.2009**
(21) Anmeldenummer: 09003056.0
(22) Anmeldetag: 03.03.2009
(51) Int. Cl.: F16K 31/124

(54) **Elektromechanischer Antrieb zur Betätigung von Ventilen**

(30) Priorität: 17.04.2008 DE 102008019182
(71) Anmelder: Voith Patent GmbH, 89522 Heidenheim (DE)
(72) Erfinder: Goll, Armin, 74673 Mulfingen (DE)
(74) Vertreter: Dr. Weitzel & Partner

(57) **Zusammenfassung**

Die Erfindung betrifft einen Elektromechanischer Antrieb zur Betätigung von Ventilen, mit
- einem Elektromotor;
- einer Lineareinheit, eine in einem Bewegungsgewinde einer Bewegungsgewindemutter geführte, zumindest in Teilbereichen als Spindel ausgeführte Kolbenstange umfasst, die in ihrer Längsachsenrichtung zur Betätigung des Ventils in der Bewegungsgewindemutter verschiebbar ist;
- und einer Kupplung, wobei die Kupplung zur Übertragung einer Drehbewegung der Motorachse des Elektromotors auf die Kolbenstange eingerichtet ist;
und wobei
- eine bevorzugt elektronische Steuereinheit vorgesehen ist, die derart eingerichtet ist, um die Drehzahl und/oder Rotorlage der Motorachse des Elektromotors in Abhängigkeit von einem Steuersignal und einem Ausgangssignal eines Positionsgebers der Stellung der Kolbenstange in der Bewegungsgewindemutter zu steuern und/oder ein Ein- und/oder Auskuppeln der Kupplung in Abhängigkeit von dem Steuersignal zu steuern; **dadurch gekennzeichnet, dass**
- der elektromechanische Antrieb zur Betätigung eines Ventils einer Dampfturbine eingerichtet ist.

## Beschreibung

Die Erfindung betrifft einen elektromechanischen Antrieb zur Betätigung von Ventilen, insbesondere an Dampfturbinen.

Es ist bekannt, Ventile an Dampfturbinen mit hydraulischen oder pneumatischen Antrieben zu schließen und zu öffnen, das heißt einen Stellantrieb dazu mit einem Hydraulikzylinder oder Pneumatikzylinder elektrohydraulisch oder elektropneumatisch zu betätigen. Beispiele für bekannte derartige Stellantriebe sind in der DE 30 19 602 C2 und in der DE 42 36846 C2 beschrieben.

Dabei werden für die Verstellung von Dampfventilen elektrohydraulische oder elektropneumatische Stellantriebe eingesetzt. Solche Stellantriebe bestehen aus einem Hydraulikzylinder oder Pneumatikzylinder, der einfachwirkend oder doppellwirkend ausgeführt sein kann, einem diesen ansteuernden hydraulischen/pneumatischen Steuerventil, das als 3/3- oder 4/3-Wegeventil ausgeführt ist und einem Positionserfassungs- und Regelmechanismus für den Hydraulikzylinder beziehungsweise Pneumatikzylinder. Mittels des Positionserfassungsmechanismus für den Hydraulikzylinder oder Pneumatikzylinder, der als elektronischer Positionssensor oder im einfachsten Fall als mechanischer Hebelmechanismus ausgeführt sein kann, wird die Ist-Position des Hydraulikzylinders/Pneumatikzylinders auf das hydraulische/pneumatische Steuerventil zurückgeführt. Damit kann dann eine Positionsregelschleife für den Hydraulikzylinder/Pneumatikzylinder ausgeführt werden, die eine sollwertabhängige stufenlose Positionierung des Hydraulikzylinders/Pneumatikzylinders erlaubt.

Eine Anforderung bei der Verstellung von Dampfventilen besteht darin, dass bei verschiedenen Fehlerbedingungen beziehungsweise Ereignissen an der Dampfturbine das Dampfventil zuverlässig und sehr schnell geschlossen werden muss, um die Dampfturbine in einen sicheren Zustand zu überführen. Solche Schnellverschlussvorgänge müssen auch bei Ausfall der Mediumsversorgung des Hydraulikzylinders oder Pneumatikzylinders, zum Beispiel der Ölversorgung, durchgeführt werden können. Daraus ergibt sich die Forderung, den Schließvorgang unabhängig von einer funktionierenden Ölversorgung ausführen zu können. Üblicherweise werden dazu am Stellantrieb oder am Dampfventil Druckfedern angebracht, die die Schießkraft unabhängig von der Ölversorgung/Luftversorgung aufbringen. Eine andere Lösung besteht darin, Mediumsdruckspeicher möglichst nahe am Stellantrieb anzubringen und aus diesen die erforderliche Mediumsmenge zu entnehmen und die Schließkraft aufzubringen.

Für die Regelung solcher Stellantriebe an Dampfventilen für Dampfturbinen gelten besondere Anforderungen hinsichtlich der Geschwindigkeit und dem Kleinsignalverhalten der Regelung. So ist es notwendig, dass bei Laständerungen an der Dampfturbine, wie sie zum Beispiel bei einer plötzlichen Entlastung eines angetriebenen Generators auftreten können, das Stellventil sehr schnell eine neue niedrigere Hubposition anzufahren hat, die dem neuen Arbeitspunkt des Generators entspricht und die die Dampfturbine innerhalb erlaubter Drehzahlbeziehungsweise Frequenzgrenzen hält. Tritt während eines solchen Regelvorgangs dann noch zusätzlich eine Schnellschließanforderung auf, so muss diese auch unmittelbar ausgeführt werden können. Ein präzises hysteresearmes Kleinsignalverhalten ist insbesondere beim Synchronisieren eines angetriebenen Generators an das elektrische Einspeisenetz erforderlich, da hier noch keine dämpfende Last an der Dampfturbine wirkt und somit kleine Hubänderungen des Stellantriebs am Dampfventil zu großen Drehzahländerungen an der Dampfturbine führen. Diese hohen Anforderungen sind mit pneumatischen Antrieben kaum zu erfüllen. Daher kommen diese nur bei einfacheren Applikationen wie zum Beispiel Dampfturbinen für Kompressor- oder Pumpenantrieben zum Einsatz, ansonsten kommen elektrohydraulisch betriebene Stellantriebe zum Einsatz.

Die bekannten Stellantriebe an Dampfturbinen benötigen eine Mediumsversorgung. Insbesondere bei Hydraulikantrieben ist dafür in der Regel eine separate Ölversorgung notwendig, die einerseits den benötigten hohen Mediumsdruck und die Ölmenge liefert und andererseits die benötigte Ölreinheit gewährleistet, die zum Betrieb von Wegeventilen erforderlich ist. Darüber hinaus ist eine aufwändige mechanische Verrohrung erforderlich, die das Medium zum Stellantrieb führt und von dort wieder zurück zur Ölversorgung. Am Stellantrieb und an der Verrohrung besteht dabei stets die Gefahr von Mediumsleckagen, verursacht durch unsachgemäße Verrohrung oder durch Lösen von Verbindungselementen infolge von Vibrationen, welche an Dampfturbinen stets vorhanden sind. Diese Mediumsleckagen können dann zu Bränden führen, wenn brennbares Medium auf die heiße Oberfläche der Dampfturbine kommt. Um das zu vermeiden, werden manchmal nichtbrennbare Mediumsflüssigkeiten eingesetzt, die aber teuer sind, höheren Wartungsaufwand nach sich ziehen und gefährlich für die Umwelt sind, und sich deswegen als Problemlösung bisher nicht durchgesetzt haben. Ein weiterer Nachteil der bekannten Stelltechnik besteht darin, dass bei elektrohydraulischen Stellantrieben die Einbaulage nicht frei gewählt werden kann, sondern in der Regel fest vorgegeben ist, was die konstruktive Freiheit bei der Anordnung solcher Antriebe einschränkt.

Der Erfindung liegt die Aufgabe zugrunde, einen elektromechanischen Antrieb zur Betätigung von Ventilen bereitzustellen, welcher die Nachteile des Standes der Technik vermeidet, insbesondere wobei eine einfache und sichere Betätigung von Ventilen von Dampfturbinen erreicht werden soll.

Diese Aufgabe wird durch den elektromechanischen Antrieb zur Betätigung von Ventilen nach dem unabhängigen Anspruch gelöst. Die abhängigen Ansprüche stellen bevorzugte Ausführungsformen der Erfindung dar.

Ein erfindungsgemäßer elektromechanischer Antrieb (Stellantrieb) zur Betätigung von Ventilen weist einen Elektromotor und eine Lineareinheit auf, wobei die Lineareinheit eine in einer Bewegungsgewindemutter geführte, zumindest in Teilbereichen als Spindel ausgeführte Kolbenstange umfasst, die in ihrer Längsachsenrichtung zur Betätigung des Ventils in dem Bewegungsgewinde der Bewegungsgewindemutter verschiebbar ist. Weiter ist eine Kupplung vorgesehen, wobei die Kupplung zur Übertragung einer Drehbewegung der Motorachse des Elektromotors auf die Kolbenstange eingerichtet ist. Eine bevorzugt elektronische Steuereinheit des erfindungsgemäßen elektromechanischen Antriebs ist eingerichtet, Drehzahl und/oder Rotorlage der Motorachse des Elektromotors in Abhängigkeit von einem Steuersignal und einem Ausgangssignal eines Positionsgebers der Stellung der Kolbenstange in der Bewegungsgewindemutter zu steuern und/oder ein Ein- und/oder Auskuppeln der Kupplung in Abhängigkeit von dem Steuersignal zu steuern.

Die Drehbewegung der Motorachse des Elektromotors wird mittels der Lineareinheit in eine Verschiebung der Kolbenstange in deren Längsachsenrichtung überführt. Diese Verschiebung wird zur Betätigung des Ventils eingesetzt. Dabei ist die Kolbenstange mit ihrem als Spindel ausgeführten Bereich (Spindelbereich) in der Bewegungsgewindemutter geführt. Der Spindelbereich ist in einer Spindelmutter geführt. Unter einem Bewegungsgewinde wird ein im Wesentlichen nicht selbsthemmendes Gewinde verstanden, so dass durch Ausüben einer Kraft in Längsachsenrichtung der Kolbenstange auf die Kolbenstange diese sich in der Bewegungsgewindemutter dreht oder die Spindelmutter bei entsprechendem Antrieb sich um die Kolbenstange dreht. Die Spindelmutter ist in einem montierten Zustand des erfindungsgemäßen Antriebes relativ zum zu betätigenden Ventil im Wesentlichen ortsfest positioniert, so dass die beim Betätigen des Ventils auftretenden Kräfte aufgenommen werden können. Durch Entkoppeln der Kupplung wird ein Schnellschluss des Ventils erleichtert, da dann beim Schnellverschließen keine Kraft zum Mitdrehen der Motorachse des Elektromotors aufgebracht werden muss. Über das Steuern und/oder Regeln der Rotorlage der Motorachse des Elektromotors kann die Position der Kolbenstange, und damit eine Ventilöffnung, exakt eingestellt werden. Mittels des Positionsgebers der Stellung der Kolbenstange ist eine Rückkopplung zur Überwachung der Steuerung möglich. Der Positionsgeber kann als ein beliebiges Bauteil, zum Beispiel ein Sensor, ausgebildet sein aus dessen Ausgangssignal die Stellung der Kolbenstange berechenbar und/oder auch indirekt ableitbar ist.

Der erfindungsgemäße Stellantrieb kann insbesondere zur Betätigung von Hubventilen, vorzugsweise von Dampfventilen an Dampfturbinen eingesetzt werden. Mittels des erfindungsgemäßen Stellantriebs können Ventile an Dampfturbinen mit einem rein elektro-mechanischen Antrieb betätigt werden. Eine Hydraulik- oder Pneumatikversorgung entfällt damit. Der Antrieb beinhaltet sämtliche erforderlichen Komponenten und Funktionen um die speziellen Anforderungen, die bei der Betätigung von Ventilen an Dampfturbinen gegeben sind, zu erfüllen. Damit eröffnet sich die Möglichkeit, bestehende hydraulische oder pneumatische Antriebe unter Beibehaltung der gewohnten Funktionalitäten und Schnittstellen einfach zu ersetzen. Der erfindungsgemäße elektromechanische Stellantrieb für Dampfventile vermeidet die Nachteile bekannter Stellantriebe für Dampfventile, wobei alle notwendigen Anforderungen an einen Stellantrieb für Dampfventile erfüllt bleiben. Der erfindungsgemäße elektromechanische Antrieb benötigt zu seinem Betrieb lediglich elektrische Energie und kann als sehr kompakte Anordnung ausgeführt sein, die alle Elemente beinhaltet, die zum Ausführen der für eine Stelleinheit eines Dampfventils notwendigen Funktion notwendig sind.

Eine besonders leichtgängige Lineareinheit kann dadurch erreicht werden, dass das Bewegungsgewinde als Kugelgewindetrieb oder Kegelrollspindeltrieb oder Trapezgewindetrieb ausgebildet ist.

Bevorzugt weist die Lineareinheit eine Kraftfeder auf, wobei die Kraftfeder das Verschieben der Kolbenstange in der Bewegungsgewindemutter in eine Ventilschließrichtung unterstützt.

Wenn die Lineareinheit mindestens einen Stoßdämpfer zur Aufnahme von kinetischer Energie der Kolbenstange bei einer Verschiebung der Kolbenstange in die Ventilschließrichtung aufweist, können Beschädigungen der Lineareinheit bei einem Schnellverschlussvorgang vermieden werden.

Sehr vorteilhaft ist zwischen der Motorachse des Elektromotors und der Kolbenstange ein Getriebe zur Kraftübertragung von der Motorachse auf die Kolbenstange vorgesehen, wodurch eine Drehmomentübersetzung der Kraftübertragung ermöglicht wird.

Wenn die Kupplung zwischen dem Getriebe und der Kolbenstange angeordnet ist kann beim Schnellverschlussvorgang das Getriebe mit abgekuppelt werden.

Das Getriebe ermöglicht weiter, dass die Motorachse und die Kolbenstange räumlich parallel zueinander nebeneinander angeordnet sein können, wodurch ein sehr kompakter Aufbau des erfindungsgemäßen elektromechanischen Antriebs möglich ist.

Bevorzugt umfasst der Positionsgeber der Stellung der Kolbenstange einen Linearwegaufnehmer in der Lineareinheit, der zur Messung der Stellung der Kolbenstange in der Bewegungsgewindemutter eingerichtet ist. Damit kann die Stellung der Kolbenstange und damit die Ventilöffnungsposition des zu betätigenden Ventils direkt gemessen werden, was zu einer sehr zuverlässigen Regelung der Drehzahl und/oder der Rotorlage des Elektromotors führt. Alternativ oder zusätzlich kann der Positionsgeber einen Drehzahl- und Rotorlagesensor des Elektromotors umfassen. Dieser Drehzahl- und Rotorlagesensor kann zum Beispiel als Inkrementalgeber oder Resolver ausgeführt sein. Wenn die Rotorlage des Elektromotors und dessen Drehzahl bekannt ist, kann daraus die Stellung der Kolbenstange einfach berechnet werden.

Eine einfache und robuste Steuerung der Drehzahl und/oder der Rotorlage des Elektromotors wird ermöglicht, wenn die Steuereinheit einen Frequenzumrichter aufweist. Der Frequenzumrichter ist dabei so dimensioniert, dass die gewünschte Steuerung erreicht wird.

Vorteilhaft ist am freien Ende der Kolbenstange eine Gelenkaugenbefestigung zur Verbindung mit einem zu betätigendem Ventil vorgesehen. Die Kolbenstange muss dann nicht exakt fluchtend mit dem Ventil ausgerichtet sein.

Die Erfindung soll nachfolgend anhand von Ausführungsbeispielen und der beigefügten Figuren exemplarisch erläutert werden.

### Es zeigen:

- Figur 1: eine Ausführungsform eines erfindungsgemäßen elektromechanischen Antriebs;
- Figur 2: eine Ausführungsform eines erfindungsgemäßen elektromechanischen Antriebs in ausfahrender Bauweise, der im Schnellschlussfall ein Dampfventil durch einfahrende Bewegungsrichtung schließt;
- Figur 3: eine weitere Ausführungsform eines erfindungsgemäßen elektromechanischen Antriebs gemäß Figur 1, mit einer externen Schalteinrichtung zur Ansteuerung der Kupplung 4;
- Figur 4: eine weitere Ausführungsform eines erfindungsgemäßen elektromechanischen Antriebs gemäß Figur 1, mit einer mechanischen Verbindungskupplung anstelle der elektrisch betätigbaren Kupplung;
- Figur 5: eine weitere Ausführungsform eines erfindungsgemäßen elektromechanischen Antriebs gemäß Figur 4, mit einer elektrisch betätigbaren Kupplung zusätzlich zur mechanischen Verbindungskupplung;
- Figur 6: eine weitere Ausführungsform eines erfindungsgemäßen elektromechanischen Antriebs gemäß Figur 1, mit einem Positionsschalter anstelle des Linearwegaufnehmers;
- Figur 7: eine weitere Ausführungsform eines erfindungsgemäßen elektromechanischen Antriebs gemäß Figur 1 ohne Kraftfeder;
- Figur 8: eine weitere Ausführungsform eines erfindungsgemäßen elektromechanischen Antriebs gemäß Figur 1 mit einer den Frequenzumrichter und den Elektromotor umfassenden kompakten Baueinheit;
- Figur 9: eine weitere Ausführungsform eines erfindungsgemäßen elektromechanischen Antriebs gemäß Figur 1 mit einer Gelenkaugenbefestigung;

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

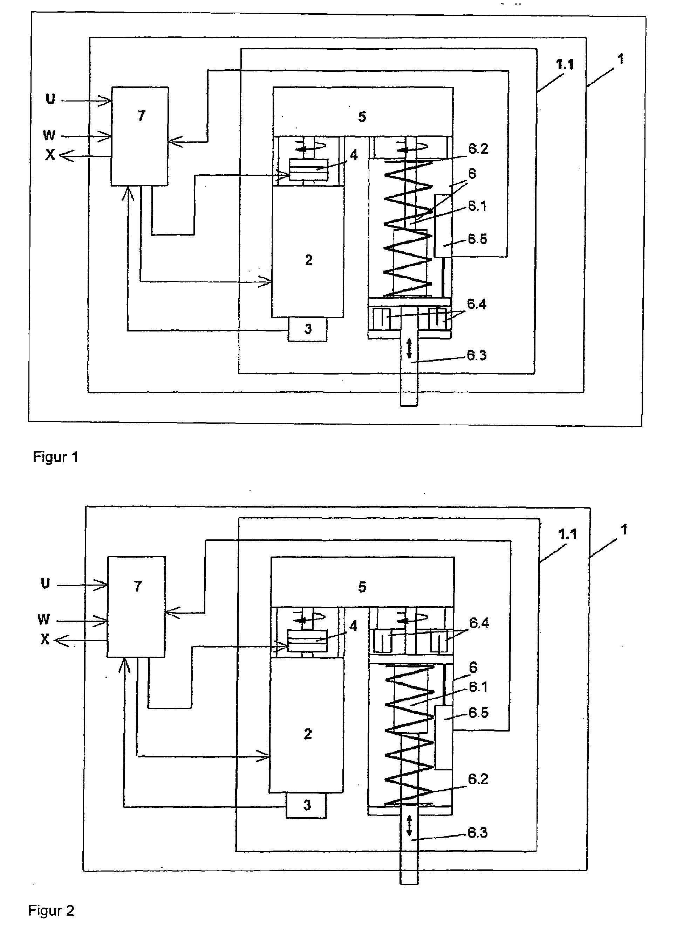

In der Figur 1 ist eine schematische Darstellung eines erfindungsgemäßen elektromechanischen Antriebs 1 zur Betätigung eines in der Figur nicht dargestellten Ventils einer Dampfturbine gezeigt. Der Antrieb 1 weist eine elektromechanische Stelleinheit 1.1 und eine Steuereinheit 7, die zum Beispiel als Frequenzumrichter ausgeführt ist, auf. Ein Elektromotor 2, der vorzugsweise als permanent erregter Synchronmotor oder Asynchronmotor ausgeführt ist, wird über die Steuereinheit angesteuert. Über einen Drehzahl- und Rotorlagesensor 3, der zum Beispiel als Inkrementalgeber oder als Resolver ausgeführt sein kann, des Elektromotors 2 wird eine Rückkopplung zur Regelung der Stellung und Drehzahl der Motorachse des Elektromotors 2 mit der Steuereinheit ermöglicht.

Ein vom Elektromotor ausgeübtes Drehmoment wird mittels eines vorzugsweise als 2-stufiges Riemengetriebe oder Zahngetriebe ausgeführtes Getriebe 5 auf eine Kolbenstange 6.3 einer Lineareinheit 6 übertragen. Das Getriebe 5 dient gleichzeitig als Gehäuse zur Aufnahme auftretender Kräfte. Zwischen der Motorachse des Elektromotors 2 und dem Getriebe 5 ist weiter eine bevorzugt als elektromechanische Zahnkupplung oder Reibkupplung ausgeführte Kupplung geschaltet. Ein Ein- und/oder Auskuppeln der Kupplung 4 wird in Abhängigkeit von einem Steuersignal von der Steuereinheit gesteuert. Die Kolbenstange weist einen als Spindel ausgeführten Abschnitt auf, mit dem sie in einer Bewegungsgewindemutter 6.1, deren Bewegungsgewinde vorzugsweise als Kugelgewinde, Kegelrollspindel oder Trapezgewindeantrieb ausgeführt ist, geführt ist. Wird der Elektromotor 2 von der Steuereinheit angesteuert, so dass sich dessen Motorachse dreht, so dreht sich im eingekuppelten Zustand der Kupplung 4 die Kolbenstange 6.3 und wird derart in die Bewegungsgewindemutter 6.1 ein- oder ausgeschraubt, dass das freie aus dem Antrieb herausstehende Ende der Kolbenstange 6.3 ausgefahren oder eingefahren wird. Letzteres ist in der Figur durch den auf der Kolbenstange gezeichneten Doppelpfeil symbolisiert.

Um die Kolbenstange 6.3 herum ist eine Kraftfeder 6.2 angeordnet, mittels derer die Kolbenstange 6.3 derart von dem Getriebe 5 weggedrückt wird, dass diese bei freier Drehbarkeit ein Ausfahren der Kolbenstange 6.3 bewirkt. Es muss also vom Elektromotor 2 eine Kraft gegen die Kraftfeder 6.2 aufgebracht werden, um die Kolbenstange einzufahren. Mittels der Kraftfeder 6.2 kann also nach einem Auskuppeln der Kupplung 4 ein selbsttätiges Ausfahren der Kolbenstange 6.3 erreicht werden, das zu einem Schnellverschließen eines Ventils dienen kann. Das Ventil, zum Beispiel Dampfventil, ist im Betrieb eines erfindungsgemäßen Antriebs 1 an das freie Ende der Kolbenstange 6.3 angekoppelt. Zur Dämpfung eines Anschlags der Kolbenstange 6.3 an deren Lagerung in der Lineareinheit 6 bei einem derartigen Schnellverschließen sind Stoßdämpfer 6.4 in der Lineareinheit 6 vorgesehen.

Weiter weist die Lineareinheit 6 einen Linearwegaufnehmer 6.5 auf, mittels dessen die Position der Kolbenstange 6.3 in der Bewegungsgewindemutter 6.1, also auch die Aus- beziehungsweise Einfahrposition der Kolbenstange 6.3, direkt gemessen werden kann. Ein eine Information zur Position der Kolbenstange 6.3 enthaltendes Ausgangssignal wird an die Steuereinheit weiter geleitet, wodurch eine weitere Rückkopplung zur Steuerung der Drehzahl- und Rotorlage des Elektromotors 2 ermöglicht ist.

Zur Betätigung eines an das freie Ende der Kolbenstange angeflanschten Ventils wird die Kolbenstange 6.3 linear auf und ab bewegt. Die Linearbewegung wird in der Lineareinheit 6 vorzugsweise mittels eines Kugelgewindeantriebs in eine Drehbewegung umgesetzt. Über das Getriebe 5 wird die Drehbewegung übersetzt an den Elektromotor 2 geführt. An den Elektromotor 2 ist der Drehzahl- und Rotorlagesensor 3 angeschlossen. Dieser Sensor 3 misst die Drehzahl und Rotorlage des Elektromotors 2 und übermittelt diese Information an den Frequenzumrichter 7. Der Frequenzumrichter 7 verarbeitet die Sensorinformation und regelt das Drehmoment, die Drehzahl und die Lage des Elektromotors 2. Er ist an das elektrische Netz U angeschlossen, von dem er seine Energie bezieht. Des weiteren bekommt er von extern den Sollwert W, der die Information über die gewünschte Position der Kolbenstange 6.3 darstellt, und liefert seinerseits nach extern den Istwert X, der die Information über die aktuelle Position der Kolbenstange 6,3 darstellt. Vorzugsweise sind das Sollwert- und das Istwertsignal auf den gleichen Wert normiert, sodass eine Diagnose und Überwachung des Antriebs erleichtert wird. Vorzugsweise ist das Sollwert- und Istwertsignal als 4-20 mA-Normsignal ausgeführt. Der Sollwert W und der Istwert X können aber auch über einen Feldbus an die Steuereinheit beziehungsweise den Frequenzumrichter 7 übermittelt werden.

Im Frequenzumrichter 7 ist ein Positionsregler für die Positionsregelung der Kolbenstange 6.3 integriert. Dazu bekommt er vom Linearwegaufnehmer 6.5 oder vom Drehzahl- und Rotorlagesensor 3 die Information über die aktuelle Position der Kolbenstange 6.3 und vergleicht diese mit dem Sollwert W. Die Ausgangsstellgröße des Positionsreglers geht als Sollwert zu einem unterlagerten Drehzahlregler, der seinen Istwert vom Drehzahl- und Rotorlagesensor 3 bekommt. Der Ausgang des Drehzahlreglers geht als Sollwert seinerseits zu einem unterlagerten Drehmomentregler, der seinen Istwert aus den umgerechneten Strangströmen des Elektromotors 2 bekommt.

Der Elektromotor 2 gibt sein Drehmoment und seine Drehzahl an die zum Beispiel elektromechanische Zahnkupplung oder Reibkupplung 4 ab, die, wenn sie über ein Ansteuersignal vom Frequenzumrichter 7 geschlossen wurde, das Drehmoment und die Drehzahl an die Antriebsseite des Getriebes 5 weitergibt. Die Kupplung 4 ist vorzugsweise so ausgebildet, dass sie mittels eines elektrischen Signals geschlossen wird und federbetätigt öffnet sobald das elektrische Ansteuersignal abgeschaltet wird. Denkbar ist auch eine umgekehrte Wirkungsweise der Kupplung 4, bei der mit dem elektrischen Steuersignal die Kupplung 4 geöffnet wird und mittels integrierter Federkraft die Kupplung 4 geschlossen wird. Die Kupplungsschließfunktion wird vorzugsweise über eine elektromagnetische Spule ausgeführt. Diese Spule wird vom Frequenzumrichter mit Strom versorgt. Um Energie zu sparen und um die Eigenerwärmung der Spule gering zu halten wird sie nach dem Anziehvorgang in stromtaktender Arbeitsweise betrieben.

Die Kupplung dient auch dazu, den Schnellverschlussvorgang (Tripvorgang) des Antriebs auszulösen. Dazu wird die rotierende Masse des Elektromotors von dem restlichen Teil des Antriebs getrennt, wodurch ein wesentlich schnellerer Schließvorgang ermöglicht wird. Nach dem Schließvorgang wird die Kupplung 4 wieder geschlossen und der Antrieb kann wieder seine normale Positionierfunktion wahrnehmen. Bei geöffneter Kupplung 4 kommen die Kraft und die Energie für die Schließfunktion aus der Kraftfeder 6.2. Diese betreibt dann das Getriebe 5 rückwärts von der Abtriebsseite her. Vorteilhafterweise sitzt die Kupplung 4 auf der Antriebsseite des Getriebes 5, da dann die Baugröße der Kupplung infolge des dort geringeren zu übertragenden Drehmoments kleiner ist und eine kleine Kupplung schneller geöffnet werden kann als eine große Kupplung. Denkbar ist aber auch eine Anordnung auf der Abtriebsseite der Kupplung oder eine Anordnung im Getriebe zwischen den einzelnen Getriebestufen. Eine abtriebsseitige Anordnung hat den Vorteil, dass beim Schließvorgang die Kraftfeder 6.2 nicht das Getriebe 5 mitbeschleunigen muss.

Das Getriebe 5 dient einerseits der Drehmoment- und Drehzahlübersetzung, andererseits stellt es auch das zentrale Gehäuseelement dar, das die Kräfte des Elektromotors 2 und der Lineareinheit 6 aufnimmt und durch seinen Aufbau, der eine räumlich parallele Anordnung des Elektromotors 2 und der Lineareinheit 6 beziehungsweise der Motorachse des Elektromotors 2 und der Kolbenstange 6.3 ermöglicht, einen besonders kompakten Aufbau des Antriebs erlaubt.

Die Lineareinheit 6 umfasst im wesentlichen die bevorzugt als Kugelgewindeeinheit ausgeführte Bewegungsgewindemutter 6.1, die Kraftfeder 6.2, die Kolbenstange 6.3, die Stoßdämpfer 6.4, und den Linearwegaufnehmer 6.5. Die Lineareinheit hat die Aufgabe, die vom Elektromotor 2 erzeugte rotatorische Bewegung der Spindel der Abtriebsseite des Getriebes 5 in eine translatorische Bewegung umzusetzen. Dazu wird vorzugsweise eine Kugelumlaufspindel eingesetzt, bei der sich die Spindel dreht und die Kugelmutter rotatorisch fest steht und sich linear bewegt. Denkbar ist jedoch auch der umgekehrte Fall, in dem die Kugelmutter rotatorisch angetrieben wird und die Spindel rotatorisch fest steht und sich linear bewegt. In die Lineareinheit 6 ist vorzugsweise die Kraftfeder 6.2 integriert, die als Kraft- und Energiespeicher dient und einen Schnellverschlussvorgang ohne Hilfe des Elektromotors ermöglicht.

Desweiteren sind in der Lineareinheit 6 die Stoßdämpfer 6.4 integriert. Diese dienen dazu, den Aufprall der Kolbenstange 6.3. auf dem mechanischen Endanschlag des Antriebs oder dem Ventilsitz des Dampfventils zu dämpfen und den Abbau der kinetischen Energie, die durch den Schließvorgang frei wurde, schonend zu ermöglichen, ohne dass die Lineareinheit mechanisch überlastet wird. Die Stoßdämpfer müssen dazu über eine geschwindigkeitsabhängige Bremsfunktion verfügen, die bei Stillstand keine verbleibende Kraft entwickelt, damit die Kraftfeder 6.2 mit ihrer Vorspannkraft im geschlossenen Zustand auf den Dampfventilsitz drückt und das Dampfventil gegen eventuell auftretende Dampfkräfte geschlossen hält.

In Figur 2 ist eine Ausführungsform eines erfindungsgemäßen elektromechanischen Antriebs 1 in ausfahrender Bauweise, der im Schnellschlussfall ein nicht dargestelltes Dampfventil durch einfahrende Bewegungsrichtung schließt, dargestellt. Im Unterschied zur Figur 1 wird die Verschiebung der Kolbenstange 6.3 durch die Kraftfeder 6.2 derart unterstützt, dass die Kraftfeder 6.2 die Kolbenstange 6.3 in ihre Einfahrrichtung unterstützt, also dass das freie Ende der Kolbenstange 6.3 durch die Federkraft der Kraftfeder 6.2 in Innenrichtung des Antriebs 1 gezogen wird. Dem entsprechend sind die Stoßdämpfer 6.4 an das Getriebe 5 angrenzend positioniert.

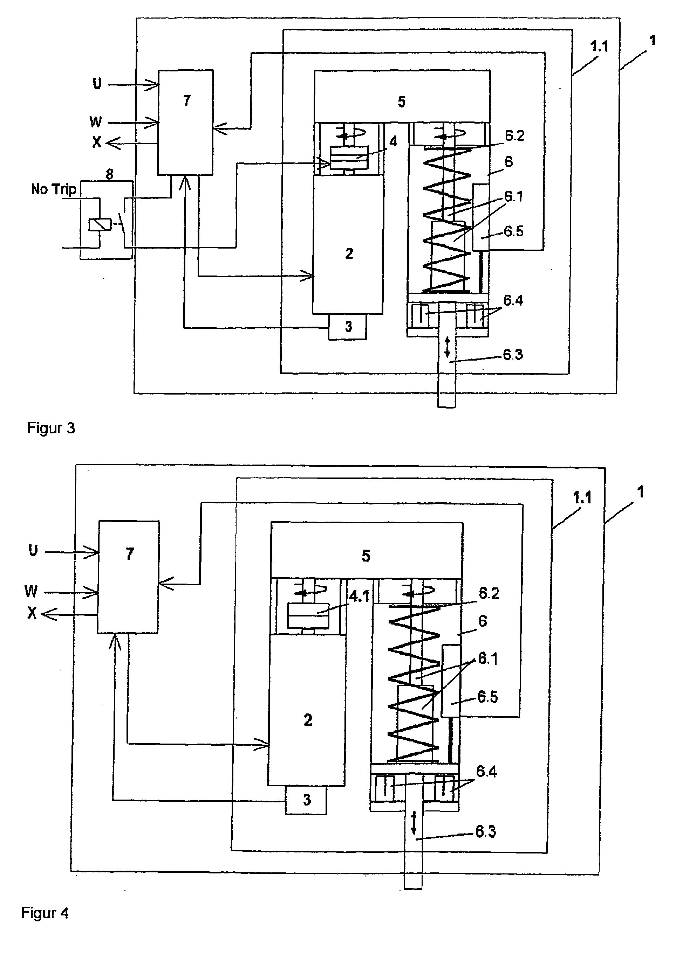

In Figur 3 ist eine Ausführungsform eines erfindungsgemäßen elektromechanischen Antriebs 1 gemäß Figur 1 dargestellt, wobei jedoch eine externe Schalteinrichtung 8 vorhanden ist, um die Kupplung 4 anzusteuern. Die externe Schalteinrichtung 8 kann also einen Schnellverschließvorgang durch Öffnen der Kupplung 4 von extern, ohne eine Inanspruchnahme des Frequenzumrichters 7, erzwingen. Die beiden Komponenten Frequenzumrichter 7 und externe Schalteinrichtung 8 können zusammen als Steuereinheit gesehen werden.

In Figur 4 ist eine weitere Ausführungsform eines erfindungsgemäßen elektromechanischen Antriebs 1 gemäß Figur 1 gezeigt, wobei jedoch anstelle der elektrisch betätigbaren Kupplung eine mechanische Verbindungskupplung 4.1 eingesetzt ist.

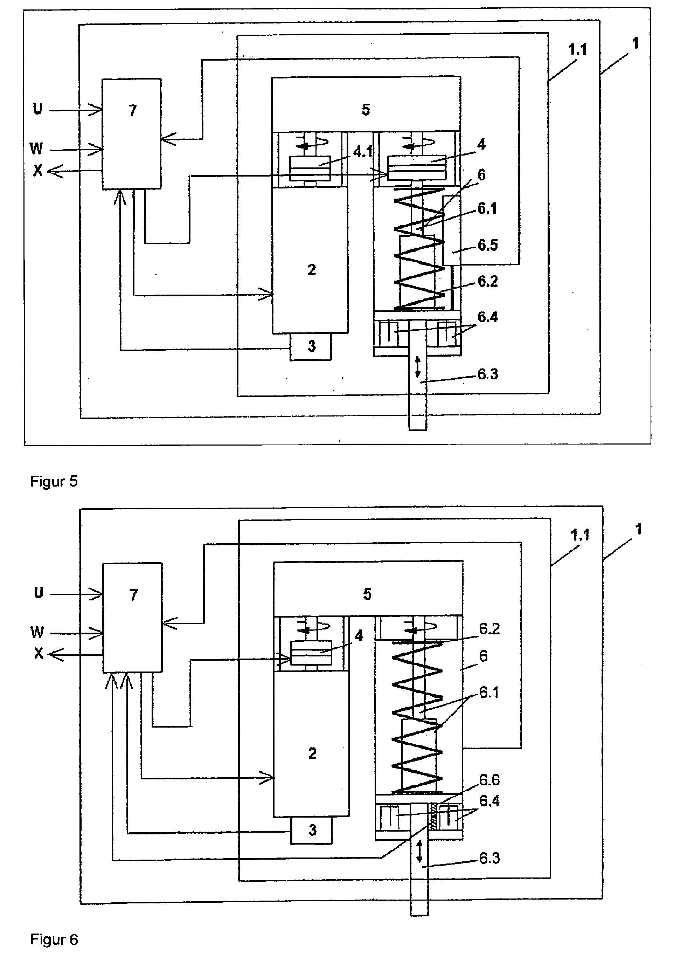

In Figur 5 ist eine Ausführungsform eines elektromechanischen Antriebs gemäß Figur 4 gezeigt, wobei zusätzlich zu der mechanischen Verbindungskupplung 4.1 eine elektromechanische Schaltkupplung 4 auf der Abtriebsseite des Getriebes 5, also zwischen Getriebe 5 und Kolbenstange 6.3, angeordnet ist, welche über den Frequenzumrichter 7 ein- und auskuppelbar ist.

In Figur 6 ist eine weitere Ausführungsform eines erfindungsgemäßen elektromechanischen Antriebs 1 gemäß Figur 1 gezeigt, wobei jedoch anstelle des Linearwegaufnehmers ein zum Beispiel als mechanischer Schalter, Näherungsschalter oder Reedschalter ausgeführter Positionsschalter 6.6 vorgesehen ist. Dabei kann zur Positionsmessung der Drehzahl- und Rotorlagesensor 3 eingesetzt werden, um eine exakte Positionsregelung der Kolbenstange 6.3 zu ermöglichen. Es wird also mit Hilfe des Drehzahl- und Rotortagesensors 3 die Linearposition der Kolbenstange 6.3 bestimmt und damit dann die Positionsregelung gespeist und betrieben. Der Einbau des Positionsschalters 6.6 dient zur Messung der Lage des Antriebs, das heißt der Kolbenstange 6.3, um eine Sicherheitsstellung abzufragen.

Allgemein kann der elektromechanische Antrieb 1 auch einen extern angebauten Linearwegaufnehmer aufweisen, der dann nicht Teil des elektronmechanischen Antriebs selbst ist, diesem jedoch das Signal über die aktuelle Hubposition, das heißt zumindest indirekt über die Stellung der Kolbenstange 6.3, liefert.

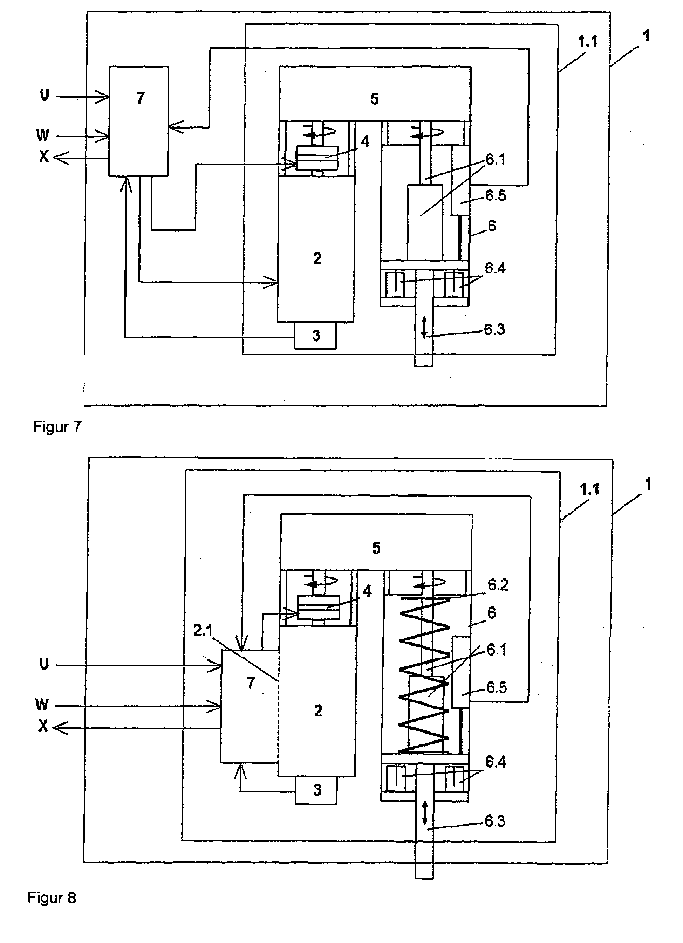

In Figur 7 ist eine weitere Ausführungsform eines erfindungsgemäßen elektromechanischen Antriebs 1 gemäß Figur 1 gezeigt, wobei jedoch keine Kraftfeder in der Lineareinheit 6 vorhanden ist.
In Figur 8 ist eine weitere Ausführungsform eines erfindungsgemäßen elektromechanischen Antriebs 1 gemäß Figur 1 gezeigt, wobei jedoch der Frequenzumrichter 7 und der Elektromotor 2 zu einer kompakten Baueinheit 2.1 integriert sind.

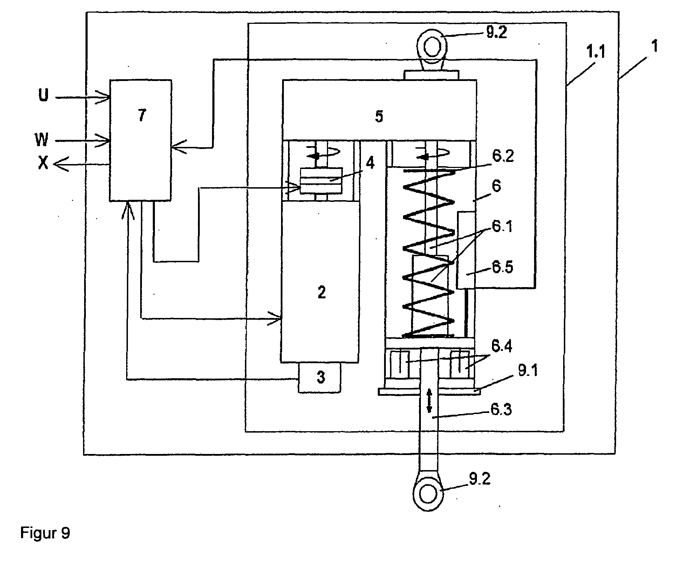

In Figur 9 ist eine weitere Ausführungsform eines erfindungsgemäßen Elektromechanischen Antriebs 1 gemäß Figur 1 gezeigt. Dabei sind Gelenkaugenbefestigungen 9.2 an der Lineareinheit 6 vorgesehen. Eine der Gelenkaugenbefestigungen 9.2 ist am freien Ende der Kolbenstange 6.3 zur Befestigung an einem Dampfventil vorgesehen. Die Gelenkaugenbefestigungen 9.2 ist am freien Ende der Kolbenstange 6.3 ersetzt die auch mögliche einfache Flanschbefestigung der Kolbenstange an dem Ventil. Die räumlich parallele Anordnung des Elektromotors 2 und der Lineareinheit 6 ermöglicht diese einfache Variation der Anbauarten der elektromechanischen Antriebseinheit 1 an eine Dampfventilanordnung entweder mit Flanschbefestigung oder mit Gelenkaugenbefestigung 9.2.

### Bezugszeichenliste

- 1: Elektromechanischer Antrieb zur Betätigung von Ventilen an Dampfturbinen
- 1.1: Elektromechanische Stelleinheit
- 2: Elektromotor
- 3: Drehzahl- und Rotorlagesensor
- 4: Kupplung
- 4.1: Mechanische Kupplung
- 5: Getriebe
- 6: Lineareinheit
- 6.1: Bewegungsgewindemutter
- 6.2: Kraftfeder
- 6.3: Kolbenstange
- 6.4: Stoßdämpfer
- 6.5: Linearwegaufnehmer
- 6.6: Positionsschalter
- 7: Frequenzumrichter
- 8: Externe Schalteinrichtung
- 9.2: Gelenkauge

## Patentansprüche

1. Elektromechanischer Antrieb (1) zur Betätigung von Ventilen, mit
1.1 einem Elektromotor (2);
1.2 einer Lineareinheit (6), eine in einem Bewegungsgewinde einer Bewegungsgewindemutter (6.1) geführte, zumindest in Teilbereichen als Spindel ausgeführte Kolbenstange (6.3) umfasst, die in ihrer Längsachsenrichtung zur Betätigung des Ventils in der Bewegungsgewindemutter (6.1) verschiebbar ist;
1.3 und einer Kupplung (4), wobei die Kupplung (4) zur Übertragung einer Drehbewegung der Motorachse des Elektromotors (2) auf die Kolbenstange (6.3) eingerichtet ist; und wobei
1.4 eine bevorzugt elektronische Steuereinheit vorgesehen ist, die derart eingerichtet ist, um die Drehzahl und/oder Rotorlage der Motorachse des Elektromotors (2) in Abhängigkeit von einem Steuersignal und einem Ausgangssignal eines Positionsgebers (3, 6.5) der Stellung der Kolbenstange (6.3) in der Bewegungsgewindemutter (6.1) zu steuern und/oder ein Ein- und/oder Auskuppeln der Kupplung (4) in Abhängigkeit von dem Steuersignal zu steuern; **dadurch gekennzeichnet, dass**
1.5 der elektromechanische Antrieb (1) zur Betätigung eines Ventils einer Dampfturbine eingerichtet ist.

2. Elektromechanischer Antrieb gemäß Anspruch 1, **dadurch gekennzeichnet, dass** das Bewegungsgewinde als Kugelgewindetrieb oder Kegelrollspindeltrieb oder Trapezgewindetrieb ausgebildet ist.

3. Elektromechanischer Antrieb gemäß einem der Ansprüche 1 bis 2, **dadurch gekennzeichnet, dass** die Lineareinheit (6) eine Kraftfeder (6.2) aufweist, wobei die Kraftfeder (6.2) das Verschieben der Kolbenstange (6.3) in der Bewegungsgewindemutter (6.1) in eine Ventilschließrichtung unterstützt.

4. Elektromechanischer Antrieb gemäß Anspruch 3, **dadurch gekennzeichnet, dass** die Lineareinheit (6) mindestens einen Stoßdämpfer (6.4) zur Aufnahme von kinetischer Energie der Kolbenstange (6.3) bei einer Verschiebung der Kolbenstange (6.3) in die Ventilschließrichtung aufweist.

5. Elektromechanischer Antrieb gemäß einem der Ansprüche 1 bis 4, **dadurch gekennzeichnet, dass** zwischen der Motorachse des Elektromotors (2) und der Kolbenstange (6.3) ein Getriebe (5) zur Kraftübertragung von der Motorachse auf die Kolbenstange (6.3) vorgesehen ist.

6. Elektromechanischer Antrieb gemäß Anspruch 5, **dadurch gekennzeichnet, dass** die Kupplung (4) zwischen dem Getriebe (5) und der Kolbenstange (6.3) angeordnet ist.

7. Elektromechanischer Antrieb gemäß einem der Ansprüche 5 bis 6, **dadurch gekennzeichnet, dass** die Motorachse und die Kolbenstange (6.3) räumlich parallel zueinander nebeneinander angeordnet sind.

8. Elektromechanischer Antrieb gemäß einem der Ansprüche 1 bis 7, **dadurch gekennzeichnet, dass** der Positionsgeber der Stellung der Kolbenstange (6.3) einen Linearwegaufnehmer (6.5) in der Lineareinheit (6) umfasst, eingerichtet zur Messung der Stellung der Kolbenstange (6.3) in der Bewegungsgewindemutter (6.1) und/oder dass der Positionsgeber einen Drehzahl- und Rotorlagesensor (3) des Elektromotors (2) umfasst.

9. Elektromechanischer Antrieb gemäß einem der Ansprüche 1 bis 8, **dadurch gekennzeichnet, dass** die Steuereinheit einen Frequenzumrichter (7) aufweist.

10. Elektromechanischer Antrieb gemäß einem der Ansprüche 1 bis 9, **dadurch gekennzeichnet, dass** am freien Ende der Kolbenstange (6.3) eine Gelenkaugenbefestigung (9.2) zur Verbindung mit einem zu betätigendem Ventil vorgesehen ist.

11. Elektromechanischer Antrieb (1) gemäß Anspruch 9, **dadurch gekennzeichnet, dass** eine externe Schalteinrichtung (8) vorgesehen ist, um die Kupplung (4) ohne Inanspruchnahme des Frequenzumrichters (7) anzusteuern.
